# EUROPÄISCHE PATENTANMELDUNG

(11) **EP 4 494 447 A1**
(43) Veröffentlichungstag der Anmeldung: **22.01.2025**
(21) Anmeldenummer: 24169915.6
(22) Anmeldetag: 12.04.2024
(51) Int. Cl.: A01D 78/10, A01D 67/00, A01F 15/08

(54) **SCHWADER**

(30) Priorität: 26.05.2023 DE 102023113952
(71) Anmelder: Maschinenfabrik Bernard Krone GmbH & Co. KG, 48480 Spelle (DE)
(72) Erfinder: Helper, Erik, 48465 Quendorf (DE); Afting, Andreas, 48488 Emsbüren (DE)

(57) **Zusammenfassung**

Die Erfindung betrifft einen Schwader (10) mit einem Rahmen (11), einem Fahrwerk (20) zur Abstützung des Rahmens (11), wenigstens einem wenigstens indirekt mit dem Rahmen (11) verbundenen Bearbeitungsorgan (25) zum Erfassen von Erntegut, sowie einer bezüglich einer Längsachse (X) des Schwaders (10) vorderseitig am Rahmen (11) angeordneten vorderen Kopplungsvorrichtung (15), die einen vorderen Ankopplungspunkt (A) zum Anhängen des Schwaders (10) an einem Schlepper (50) definiert. Um eine effiziente Ausführung des Schwadens von Erntegut und der Weiterverarbeitung des Ernteguts zu Erntegutballen zu ermöglichen, ist erfindungsgemäß vorgesehen, dass bezüglich der Längsachse (X) hinterseitig am Rahmen (11) eine hintere Kopplungsvorrichtung (17) angeordnet ist, die einen hinteren Ankopplungspunkt (B) zum Anhängen einer Ballenpresse (60) an den Schwader (10) definiert.

## Beschreibung

Die vorliegende Erfindung betrifft einen Schwader nach dem Oberbegriff von Anspruch 1.

Halmgut wie zum Beispiel Gras wird üblicherweise in mehreren Schritten geerntet und verarbeitet. Zunächst erfolgt ein Mähen des Halmguts mit einer Mähmaschine, wonach das Halmgut entweder einfach liegen gelassen wird oder zum Beispiel zur besseren Trocknung auf dem Feld verteilt und/oder gewendet wird. Zu einem späteren Zeitpunkt, gegebenenfalls wenn das Halmgut getrocknet ist, kann es aufgenommen und zu Erntegutballen verarbeitet werden. Dies erfolgt in zwei Arbeitsschritten. Zunächst wird das auf dem Feld verteilte Erntegut mittels eines Schwaders zu einem Schwad zusammengelegt. Bekannte Schwader, zum Beispiel Kreiselschwader, werden typischerweise von einem Schlepper gezogen, der auch die Antriebsleistung für die Bearbeitungsorgane des Schwaders bereitstellt, beispielsweise über eine Zapfwelle. Die Fahrtroute des Schleppers bestimmt dabei den Verlauf des entstehenden Schwads. Das Aufnehmen und Verpressen des Halmguts wird mittels einer Ballenpresse, zum Beispiel einer Rundballenpresse, durchgeführt. Derartige Ballenpressen können als Selbstfahrer ausgebildet sein oder von einem Schlepper gezogen werden. Der Schlepper kann wiederum die Antriebsleistung für Zuführ-, Press- und Bindeorgane der Rundballenpresse zur Verfügung stellen. Bei der klassischen Prozessfolge muss das Feld also dreimal abgefahren werden. Während ein zeitlicher Abstand zwischen dem Mähen und Schwaden oftmals sinnvoll ist, um das Halmgut zwischenzeitlich trocknen zu lassen, können das Schwaden und Verpressen grundsätzlich unmittelbar aufeinander folgen. Das heißt einem ersten Gespann aus einem ersten Schlepper und einem Schwader kann unmittelbar ein zweites Gespann aus einem zweiten Schlepper und einer Ballenpresse folgen. Hierfür sind allerdings zwei Schlepper notwendig. Andererseits geht beim Einsatz eines einzigen Schleppers, der nacheinander erst den Schwader über das Feld zieht und danach die Rundballenpresse, unter Umständen wertvolle Zeit verloren.

Aufgabe der Erfindung ist es, eine effiziente Ausführung des Schwadens von Erntegut und der Weiterverarbeitung des Ernteguts zu Erntegutballen zu ermöglichen.

Die Aufgabe wird gelöst mit einem Schwader mit den Merkmalen des unabhängigen Patentanspruchs 1. Vorteilhafte Ausführungsformen sind den abhängigen Ansprüchen entnehmbar.

Dafür wird ein Schwader geschaffen, mit einem Rahmen, einem Fahrwerk zur Abstützung des Rahmens, wenigstens einem wenigstens indirekt mit dem Rahmen verbundenen Bearbeitungsorgan zum Erfassen von Erntegut, sowie einer bezüglich einer Längsachse des Schwaders vorderseitig am Rahmen angeordneten vorderen Kopplungsvorrichtung, die einen vorderen Ankopplungspunkt zum Anhängen des Schwaders an einen Schlepper definiert.

Der Schwader ist dazu ausgebildet, am Boden liegendes Erntegut, insbesondere Halmgut wie Gras oder Heu, mittels wenigstens einem Bearbeitungsorgan zu erfassen und zu einem Schwad zusammenzulegen. Das wenigstens eine Bearbeitungsorgan ist entweder direkt oder indirekt, also über wenigstens ein zwischengeordnetes Element, mit dem Rahmen verbunden. Es bildet denjenigen Teil des Schwaders, der aktiv mit dem Erntegut zusammenwirkt. Es ist bevorzugt beweglich am Schwader-Rahmen angeordnet und kann insbesondere relativ zum Rahmen antreibbar sein. Die angetriebene Bewegung dient zum Bewegen des Ernteguts, welches zusammengelegt wird, wobei durch die Bewegung des Schwaders entlang des Feldes ein langgestreckter Schwad entsteht. Der Rahmen bildet das strukturelle Grundgerüst des Schwaders und verleiht ihm Stabilität. Dementsprechend sind weitere Komponenten des Schwaders fest oder beweglich am Rahmen angeordnet. Bezüglich des Rahmens lassen sich eine entgegen der Fahrtrichtung nach hinten weisende Längsachse, eine in Fahrtrichtung gesehen nach rechts weisende Querachse und eine aufwärts weisende Hochachse des Schwaders definieren. Ein Fahrwerk, welches mit dem Rahmen verbunden ist, dient dazu, diesen abzustützen. Das Fahrwerk weist aus Stabilitätsgründen vorteilhaft wenigstens eine Achse auf, sowie wenigstens zwei entlang der Querachse zueinander versetzte Räder. Zusätzlich kann ein Hilfsfahrwerk vorgesehen sein, das das wenigstens eine Bearbeitungsorgan abstützt.

Bezüglich der Längsachse des Schwaders ist vorderseitig am Rahmen eine vordere Kopplungsvorrichtung angeordnet, die einen vorderen Ankopplungspunkt zum Anhängen des Schwaders an einen Schlepper definiert. Die vordere Kopplungsvorrichtung kann ganz oder teilweise in den Rahmen integriert sein und insbesondere ganz oder teilweise einstückig mit diesem ausgebildet sein. Aus Stabilitätsgründen ist sie bevorzugt zumindest starr mit dem Rahmen verbindbar oder auch dauerhaft starr mit dem Rahmen verbunden, zum Beispiel verschweißt, verschraubt oder vernietet. Sie ist dazu ausgebildet, eine Verbindung zum Schlepper herzustellen, damit dieser den Schwader ziehen kann. Entsprechend definiert sie den vorderen Ankopplungspunkt, wobei der Begriff "Punkt" selbstverständlich nicht im mathematischen Sinn zu verstehen ist, sondern sich auf einen gewissen Bereich bezieht, der allerdings im Vergleich zu den Abmessungen des gesamten Schwaders klein und somit "punktartig" ist. Die vordere Kopplungsvorrichtung ist zum Zusammenwirken mit einer komplementären Kopplungsvorrichtung auf Seiten des Schleppers ausgebildet. So kann zum Beispiel ein Kupplungsmaul vorgesehen sein, das mit einer Kugelkopfkupplung auf Seiten des Schleppers zusammenwirkt. Allgemein ist der Ankopplungspunkt derjenige Bereich, in dem in angekoppeltem Zustand die Kraftübertragung zwischen Schlepper und Schwader erfolgt.

Erfindungsgemäß ist bezüglich der Längsachse hinterseitig am Rahmen eine hintere Kopplungsvorrichtung angeordnet, die einen hinteren Ankopplungspunkt zum Anhängen einer Ballenpresse an den Schwader definiert. Die hintere Kopplungsvorrichtung kann ganz oder teilweise in den Rahmen integriert sein, es ist aber insbesondere auch möglich, dass sie ein eigenes Bauteil oder eine eigene Baugruppe bildet, die mit dem Rahmen verbunden ist. Sie ist bevorzugt zumindest starr mit dem Rahmen verbindbar, man kann auch sagen, relativ zum Rahmen arretierbar. Sie ist dazu ausgebildet, eine Verbindung zu einer Ballenpresse herzustellen, damit diese an den Schwader angehängt werden kann. Entsprechend definiert sie den hinteren Ankopplungspunkt, wobei der Begriff "Punkt" wiederum im oben erläuterten Sinn zu verstehen ist. Die hintere Kopplungsvorrichtung ist zum Zusammenwirken mit einer komplementären Kopplungsvorrichtung auf Seiten der Ballenpresse ausgebildet. Sie kann zum Beispiel eine Kugelkopfkupplung aufweisen, die mit einem Kupplungsmaul auf Seiten der Ballenpresse zusammenwirkt. Durch die hintere Kopplungsvorrichtung kann also die Ballenpresse an den Schwader angehängt werden, so dass sie mittelbar vom Schlepper gezogen werden kann, während dieser den Schwader zieht. Es versteht sich, dass sowohl die Kopplungsvorrichtungen als auch deren Verbindungen zum Rahmen sowie der Rahmen selbst dazu ausgelegt sind, die Zugkraft zwischen dem Schlepper und der Ballenpresse zu übertragen.

Mit dem erfindungsgemäßen Schwader ist es möglich, den Schlepper, den Schwader und die Ballenpresse in einem einzigen Gespann zu kombinieren. Bei der Feldbearbeitung erfasst der Schwader am Boden liegendes Erntegut mittels des beziehungsweise der Bearbeitungsorgane und legt dieses zu einem Schwad zusammen. Die innerhalb des Gespanns nachfolgende Ballenpresse kann den Schwad anschließend aufnehmen und im Weiteren zu Erntegutballen verpressen. Dies ermöglicht bei Einsatz eines einzigen Schleppers eine hocheffiziente und zeitsparende Verarbeitung des Ernteguts.

Grundsätzlich kann sich die Erfindung auf unterschiedliche Arten von Schwadern beziehen, beispielsweise Sternradschwader, Kammschwader, Bandschwader oder dergleichen. Bevorzugt ist der Schwader als Kreiselschwader ausgebildet und weist als Bearbeitungsorgan wenigstens einen Rechkreisel auf. Vorteilhaft sind wenigstens zwei Rechkreisel vorgesehen. Der grundsätzliche Aufbau und die Funktionsweise eines Kreiselschwaders sind bekannt und werden daher nicht im Detail diskutiert. Jeder Rechkreisel bildet ein Bearbeitungsorgan, welches über eine Mehrzahl von Zinkenarmen mit dem Erntegut zusammenwirkt. Zwei Rechkreisel, die gegenläufig angetrieben werden, können das Erntegut in einem Ablagebereich ablegen, der wenigstens teilweise zwischen ihnen angeordnet ist. Bei einem Zweikreiselschwader sind genau zwei Rechkreisel vorgesehen, es wäre im Rahmen der Erfindung allerdings auch beispielsweise eine Ausgestaltung als Vierkreiselschwader oder Sechskreiselschwader möglich, wobei insbesondere die zusätzlichen Kreiselpaare weiter vom Ablagebereich entferntes Erntegut erfassen und in den Wirkbereich des innersten Kreiselpaars befördern.

Wenigstens ein Bearbeitungsorgan kann an einem mit dem Rahmen verbundenen Auslegerarm angeordnet sein. Dies kann insbesondere für einen Rechkreisel eines Kreiselschwaders gelten. Man kann auch sagen, dass das Bearbeitungsorgan am Auslegerarm aufgehängt ist. Es kann für jedes Bearbeitungsorgan (zum Beispiel jeden Rechkreisel) ein eigener Auslegerarm vorgesehen sein, es wäre allerdings auch möglich, dass eine Mehrzahl von Bearbeitungsorganen an einem einzigen Auslegerarm angeordnet ist. Der jeweilige Auslegerarm ist seinerseits mit dem Rahmen verbunden. Die Verbindung kann starr oder beweglich sein. Insbesondere kann der jeweilige Auslegerarm schwenkbar mit dem Rahmen verbunden sein, um etwa den Auslegerarm mit dem Bearbeitungsorgan für eine Straßenfahrt in eine Transportposition hochzuschwenken und für den Feldeinsatz in eine Bearbeitungsposition herunterzuschwenken. Es ist auch möglich, dass der Auslegerarm in sich verstellbar ist, zum Beispiel ausfahrbar, um eine unterschiedliche Position des Bearbeitungsorgans gegenüber dem Rahmen einstellen zu können. Der jeweilige Auslegerarm erstreckt sich wenigstens anteilig entlang der Querachse, was sich zumindest auf die oben genannte Bearbeitungsposition bezieht. Unter Umständen kann er auch parallel zur Querachse verlaufen.

Der Rahmen kann vorteilhaft einen Längsabschnitt aufweisen, welcher sich entlang der Längsachse erstreckt und die vordere Kopplungsvorrichtung mit der hinteren Kopplungsvorrichtung verbindet. Der Längsabschnitt ist in sich starr ausgebildet und kann wenigstens überwiegend einstückig ausgebildet sein, zum Beispiel durch einen einzigen Profilträger oder ein einziges Rohr. Er ist wesentlich für die Übertragung der Zugkräfte zwischen Schlepper, Schwader und Ballenpresse verantwortlich und muss demensprechend stabil sein. Das Fahrwerk kann mit einem hinteren Bereich, zum Beispiel einem hinteren Drittel, des Längsabschnitts verbunden sein.

Um zu vermeiden, dass die genannten Zugkräfte zu wesentlichen Biegemomenten führen, ist es bevorzugt, den Längsabschnitt möglichst niedrig, annähernd auf Höhe der Ankopplungspunkte anzuordnen. Eine Ausgestaltung sieht vor, dass der Längsabschnitt einen Bodenabstand aufweist, der höchstens 50%, bevorzugt höchstens 30% größer ist als ein minimaler Bodenabstand der Ankopplungspunkte. Der minimale Bodenabstand der Ankopplungspunkte ist der Bodenabstand des Ankopplungspunktes, der am niedrigsten angeordnet ist. Weisen beide Ankopplungspunkte einen identischen Bodenabstand auf, ist dies der minimale Bodenabstand. Wenngleich diese Ausführungsform vorsieht, dass der Bodenabstand des Längsabschnitts höchstens 50% beziehungsweise höchstens 30% größer ist, schließt dies ausdrücklich die Möglichkeit ein, dass er genauso groß ist wie der minimale Bodenabstand der Ankopplungspunkte, oder sogar kleiner ist als dieser.

Um Biegemomente zu minimieren, ist auch ein möglichst geradliniger Verlauf des Längsabschnitts von Vorteil. Gemäß einer entsprechenden Ausführungsform verläuft der Längsabschnitt auf wenigstens 80% seiner Länge in einem Winkel von höchstens 10°, bevorzugt höchstens 5°, zur Längsachse. Insbesondere kann er auf wenigstens 90 % seiner Länge oder auf gesamter Länge in einem Winkel von höchstens 10° oder höchstens 5° zur Längsachse verlaufen. Er kann auch vollständig parallel zur Längsachse verlaufen. Dabei kann er beispielsweise durch ein gerades Profilteil oder Rohr gebildet sein.

Einerseits ist es vorteilhaft, den Längsabschnitt niedrig anzuordnen. Andererseits lässt sich ein Bearbeitungsorgan und somit auch ein Auslegerarm nicht beliebig weit nach unten versetzen. Beispielsweise müssen die Zinkenarme eines Rechkreisels einen gewissen Mindestabstand vom Boden haben, um eine effektive Funktion zu gewährleisten. Dem wird in einer Ausführungsform dadurch Rechnung getragen, dass wenigstens ein Auslegerarm mit einem Ausleger-Anbindungsabschnitt des Rahmens verbunden ist, der bezüglich einer Hochachse aufwärts vom Längsabschnitt abragt, so dass der wenigstens eine Auslegerarm wenigstens im Bereich des Ausleger-Anbindungsabschnitts wenigstens überwiegend höher angeordnet ist als der Längsabschnitt. Während sich der Längsabschnitt entlang eines überwiegenden Teils der Gesamtlänge des Schwaders erstreckt, kann der Ausleger-Anbindungsabschnitt vergleichsweise kurz ausgebildet sein. Er kann sich insbesondere bezüglich der Längsachse entlang höchstens 20% des Längsabschnitts erstrecken. Er ragt bezüglich der Hochachse vom Längsabschnitt ab. Dadurch ist er wenigstens teilweise höher angeordnet. Der jeweilige Auslegerarm ist mit diesem Ausleger-Anbindungsabschnitt verbunden. Dementsprechend ist er wenigstens im Bereich des Ausleger-Anbindungsabschnitts ganz oder wenigstens überwiegend höher angeordnet als der Längsabschnitt. Insbesondere kann der Auslegerarm überwiegend oder auch vollständig höher angeordnet sein als der Längsabschnitt. Sofern der Auslegerarm über eine Ausleger-Schwenkachse schwenkbar mit dem Ausleger-Anbindungsabschnitt verbunden ist, ist die Ausleger-Schwenkachse, insbesondere entlang ihrer gesamten Erstreckung, bevorzugt höher angeordnet als der Längsabschnitt. Bei einer derartigen Ausgestaltung, bei welcher der Auslegerarm zwischen einer hochgeschwenkten Transportposition und einer heruntergeschwenkten Bearbeitungsposition verschwenkbar ist, beziehen sich die obigen Aussagen hinsichtlich der Anordnung des Auslegerarms auf die zur Feldbearbeitung vorgesehene Bearbeitungsposition.

Eine bevorzugte Ausgestaltung sieht vor, dass die hintere Kopplungsvorrichtung verstellbar ist, wodurch der hintere Ankopplungspunkt relativ zum Rahmen bezüglich der Längsachse verlagerbar ist. Die hintere Kopplungsvorrichtung kann manuell oder auch aktorisch verstellbar sein. Sie kann insbesondere relativ zum Rahmen verschiebbar sein. In jedem Fall kann durch die Verstellung der hinteren Kopplungsvorrichtung der hintere Ankopplungspunkt relativ zum Rahmen bezüglich der Längsachse verlagert werden, das heißt er kann weiter nach vorne oder weiter nach hinten verlagert werden. Bevorzugt kann er parallel zur Längsachse verlagert werden, so dass sich seine Position bezüglich der Querachse sowie der Hochachse nicht ändert. Es ist allerdings auch eine anteilige Verlagerung entlang der Querachse und/oder der Hochachse möglich. Durch die Verlagerung des hinteren Ankopplungspunkts ist eine Anpassung an unterschiedliche Ballenpressen möglich. So kann bei einer Ballenpresse mit kurzer Deichsel der Ankopplungspunkt weiter nach hinten verlagert werden, wodurch beispielsweise bei Kurvenfahrten das Risiko einer Kollision zwischen Ballenpresse und Schwader verringert wird. Außerdem kann durch die Position des hinteren Ankopplungspunktes die Fahrlinie der Ballenpresse bei einer Kurvenfahrt so beeinflusst werden, dass vermieden werden kann, dass ein Teil des Schwads nicht erfasst wird.

Bevorzugt ist der hintere Ankopplungspunkt relativ zum Fahrwerk bezüglich der Längsachse verlagerbar. Das heißt, durch die Verstellung der hinteren Kopplungsvorrichtung kann die Relativposition von Fahrwerk und hinterem Ankopplungspunkt bezüglich der Längsachse verändert werden. Es versteht sich, dass hierdurch auch der Abstand der nachfolgenden Ballenpresse zum Fahrwerk des Schwaders angepasst werden kann. Auf diese Weise kann insbesondere eine Kollision zwischen der Ballenpresse und dem Fahrwerk verhindert werden. Dies ist insbesondere dann von Bedeutung, wenn das Fahrwerk wenigstens teilweise bezüglich der Längsachse hinter dem wenigstens einen Bearbeitungsorgan angeordnet ist.

Es ist auch denkbar, dass die hintere Kopplungsvorrichtung derart verstellbar ist, dass der hintere Ankopplungspunkt relativ zum Rahmen bezüglich der Querachse verlagerbar ist. Sofern dies zusätzlich zu einer Verlagerung bezüglich der Längsachse möglich ist, ist es bevorzugt, dass die beiden Verlagerungen unabhängig voneinander einstellbar sind. Durch eine Verlagerung des hinteren Ankopplungspunkt entlang der Querachse wird sowohl bei einer Kurvenfahrt als auch bei einer Geradeausfahrt die Fahrlinie der Ballenpresse gegenüber dem Schwader beeinflusst. Dies hat unmittelbare Auswirkungen auf die Aufnahme des Schwads durch die Ballenpresse.

Bevorzugt weist der Schwader eine Eingangskupplung zur Antriebsverbindung mit einer Zapfwelle des Schleppers auf sowie eine Ausgangskupplung, die wenigstens kraftübertragend an die Eingangskupplung koppelbar ist und die zur Antriebsverbindung mit der Ballenpresse ausgebildet ist. Die Eingangskupplung kann beispielsweise an einer Gelenkwelle angeordnet sein, die in geeigneter Weise mit der Zapfwelle des Schleppers verbindbar ist. Normalerweise handelt es sich um eine Kupplung, die zum formschlüssigen Eingriff mit einer entsprechenden Kupplung auf Seiten der Zapfwelle vorgesehen ist. Die Ausgangskupplung ist entweder permanent kraftübertragend an die Eingangskupplung gekoppelt oder kann zumindest zeitweise kraftübertragend an diese gekoppelt werden. Somit können eine Antriebskraft sowie ein Antriebsdrehmoment, welche seitens des Schleppers erzeugt werden, auf die Ausgangskupplung übertragen werden. Dabei ist ausdrücklich auch eine Veränderung der Kraft und/oder des Drehmoments möglich, zum Beispiel über ein zwischengeordnetes Getriebe, welches eine Übersetzung oder Untersetzung bewirkt. Die Ausgangskupplung kann ihrerseits an einer Zapfwelle angeordnet sein, die derjenigen des Schleppers entsprechen kann. Somit kann die Ballenpresse ihrerseits mit einer Kupplung, mit welcher sie direkt am Schlepper angeschlossen werden könnte, an die Ausgangskupplung des Schwaders angeschlossen werden. Grundsätzlich könnten allerdings die Eingangskupplung und die Ausgangskupplung auch zu unterschiedlichen Kupplungssystemen gehören.

Vorteilhaft weist der Schwader eine Getriebeanordnung auf, über die sowohl das wenigstens eine Bearbeitungsorgan als auch die Ausgangskupplung wenigstens kraftübertragend an die Eingangskupplung koppelbar sind. Auch in diesem Fall bezeichnet "wenigstens kraftübertragend koppelbar" entweder eine permanente Kopplung oder eine zeitweise mögliche Kopplung. Die Getriebeanordnung ermöglicht also, dass die Antriebsleistung des Schleppers, die über die Eingangskupplung übertragen wird, aufgeteilt wird und einerseits zur Ausgangskupplung (und damit weiter zur Ballenpresse) sowie andererseits zu dem/den Bearbeitungsorgan(en) übertragen wird. Entsprechend weist die Getriebeanordnung ein Verteilergetriebe auf. Sie kann insbesondere auch Wellen aufweisen, durch die die Kraftübertragung vom Verteilergetriebe zur Ausgangskupplung sowie zu dem jeweiligen Bearbeitungsorgan erfolgt. Beispielsweise kann im Falle eines Kreiselschwaders jeweils eine Auslegerwelle vorgesehen sein, die sich vom Rahmen zu dem Bereich des Auslegerarms erstreckt, in welchem der Rechkreisel angeordnet ist. Außerdem kann eine Längswelle vorgesehen sein, die sich bis zur Ausgangskupplung erstreckt. Es ist möglich, dass die Eingangskupplung und die Ausgangskupplung durch die Längswelle drehfest miteinander verbunden sind. Alternativ kann die Längswelle allerdings auch über das zwischengeordnete Verteilergetriebe an die Eingangskupplung gekoppelt sein.

Insbesondere kann eine Längswelle zur Kraftübertragung von der Eingangskupplung zur Ausgangskupplung wenigstens überwiegend innerhalb des Rahmens, bevorzugt wenigstens überwiegend innerhalb des Längsabschnitts, angeordnet sein. Auf diese Weise ist die Längswelle, die sich über einen überwiegenden Teil der Gesamtlänge des Schwaders erstrecken kann, vor äußeren Einflüssen wie Beschädigung oder Verschmutzung geschützt. Außerdem kann durch die Anordnung der Längswelle im Rahmen Platz eingespart werden. Eine Anordnung seitlich des Rahmens kann unter Umständen den verfügbaren Platz für die Bearbeitungsorgane wie insbesondere Rechkreisel einschränken. Eine Anordnung oberhalb des Rahmens kann bedeuten, dass die Längswelle durch den Ausleger-Anbindungsabschnitt geführt werden muss. Eine Anordnung unterhalb des Rahmens kann gegebenenfalls die Bodenfreiheit des Schwaders verringern. Andererseits weist der Rahmen und insbesondere der Längsträger schon aus Stabilitätsgründen typischerweise einen so großen Querschnitt auf, dass sich die Längswelle ohne Weiteres darin unterbringen lässt.

Bevorzugt ist die Ausgangskupplung derart mit der hinteren Kopplungsvorrichtung verbunden, dass ihre Relativposition gegenüber dem hinteren Ankopplungspunkt bezüglich der Längsachse von der Einstellung der hinteren Kopplungsvorrichtung unabhängig ist. Das heißt, die Ausgangskupplung ist über die hintere Kopplungsvorrichtung positionsfest zum hinteren Ankopplungspunkt gehalten, wenigstens in Bezug auf die Längsachse. Das heißt, unabhängig davon, wie die hintere Kopplungsvorrichtung gegenüber dem Rahmen eingestellt ist, bleiben die Ausgangskupplung und der hintere Ankopplungspunkt im gleichen Abstand bezüglich der Längsachse. Dies ist insofern vorteilhaft, als es dadurch möglich ist, ein Gelenk einer Gelenkwelle, durch welche die Ballenpresse mit der Ausgangskupplung verbunden wird, stets in der gleichen Position bezüglich des hinteren Ankopplungspunkt anzuordnen. Besonders vorteilhaft ist es, wenn das genannte Gelenk exakt oder wenigstens annähernd vertikal oberhalb des hinteren Ankopplungspunkt angeordnet ist, wenn also beispielsweise der Abstand des Gelenks bezüglich der Längsachse sowie der Querachse maximal 10 cm oder maximal 5 cm beträgt. Gelenkwellen weisen regelmäßig auch teleskopierende Abschnitte zum Längenausgleich auf. Aufgrund von Reibungskräften ist allerdings jeder Längenausgleich mit einer Belastung der Gelenkwelle verbunden. Stimmen allerdings die Positionen des Gelenks und des hinteren Ankopplungspunkts bezüglich der horizontalen Ebene wenigstens annähernd überein, wird der notwendige Längenausgleich minimiert. Dies wirkt sich positiv auf die Lebensdauer der Gelenkwelle aus. Eine derartige Anordnung kann bei Gelenkwellen, welche Ballenpressen typischerweise aufweisen, insbesondere dadurch erreicht werden, dass die Ausgangskupplung gegenüber dem hinteren Ankopplungspunkt bezüglich der Längsachse zwischen 10 cm und 20 cm nach vorne versetzt angeordnet ist. Genauer gesagt bezieht sich diese Aussage auf den am weitesten vorne angeordneten Teil der Ausgangskupplung, welcher zum Eingriff mit einer Kupplung der Ballenpresse ausgebildet ist.

Zusätzlich zu der Kraftübertragung an die Ballenpresse mittels der Ausgangskupplung kann auch eine Signalübertragung zwischen der Ballenpresse und dem Schwader vorgesehen sein. Dabei können eine Schwader-Steuereinheit und eine Pressen-Steuereinheit entweder drahtlos oder insbesondere drahtgebunden miteinander kommunizieren. Der Schwader kann dementsprechend heckseitig eine Schnittstelle zur signalübertragenden Verbindung mit der Ballenpresse aufweisen. Über die Schnittstelle können Informationen wie zum Beispiel Messwerte ausgetauscht werden. Insbesondere können aber auch Stellsignale übertragen werden. Insbesondere kann vorgesehen sein, dass die Rundballenpresse ein Stellsignal an den Schwader sendet, woraufhin dieser eine Einstellung vornimmt. Da der Schwader und die Ballenpresse ohnehin zur Zugkraftübertragung mechanisch aneinander gekoppelt sind, kann das Stellsignal insbesondere drahtgebunden übertragen werden. Namentlich können der Schwader und die Ballenpresse über einen ISOBUS verbunden sein, über welchen die Ballenpresse das Stellsignal (digital) an den Schwader sendet.

Eine Ausgestaltung sieht vor, dass eine auf das Fahrwerk ausübbare Bremskraft verstellbar ist zwischen einer schwächeren Einzelbetrieb-Einstellung, die an einen Einsatz ohne Ballenpresse angepasst ist, und einer stärkeren Kombinationsbetrieb-Einstellung, die an einen Einsatz mit angekoppelter Ballenpresse angepasst ist. Die Bremskraft kann dabei beispielsweise hydraulisch oder pneumatisch erzeugt werden, wobei die "ausübbare Bremskraft" einem möglichen Maximalwert der Bremskraft entspricht. Wenn der Schwader ohne angehängte Ballenpresse eingesetzt wird, kann die ausübbare Bremskraft auf die Einzelbetrieb-Einstellung eingestellt werden, wobei der Wert ähnlich wie bei im Stand der Technik bekannten Schwadern gewählt sein kann. Ist allerdings die Ballenpresse angehängt, stützt diese sich mit einem Teil ihres Gewichts über die hintere Kopplungsvorrichtung auf dem Schwader ab und bewirkt eine zusätzliche Achslast. Dementsprechend ist für eine effektive Bremsung eine höhere Bremskraft sinnvoll, was durch die Kombinationsbetrieb-Einstellung erreichbar ist, die im Vergleich zur Einzelbetrieb-Einstellung stärker ist. Somit kann einerseits ein effektives Bremsen bei angehängter Ballenpresse erreicht werden, während andererseits bei fehlender Ballenpresse verhindert werden kann, dass die Räder des Fahrwerks blockieren und somit beispielsweise den Untergrund beschädigen. Sofern die ausübbare Bremskraft für eine Straßenfahrt auch auf eine Straßeneinstellung oder Transporteinstellung einstellbar ist, ist die Kombinationsbetrieb-Einstellung bevorzugt von der Straßeneinstellung verschieden. Auch die Straßeneinstellung ist stärker als die Einzelbetrieb-Einstellung, da beim Straßentransport eine Abstützung der Bearbeitungsorgane über ein Hilfsfahrwerk nicht möglich ist und somit die Achslast am (Haupt-)Fahrwerk größer wird. In aller Regel ist allerdings hierbei ein anderer Wert für die Bremskraft optimal als für den Einsatz auf dem Feld bei angehängter Ballenpresse.

Es ist einerseits denkbar, dass die Verstellung zwischen Einzelbetrieb-Einstellung und Kombinationsbetrieb-Einstellung durch einen Benutzer vorgenommen werden muss, entweder am Schwader selbst oder über ein externes Eingabegerät, das signalübertragend mit dem Schwader verbunden ist, zum Beispiel ein Eingabegerät im Schlepper. Vorteilhaft kann der Schwader allerdings dazu eingerichtet sein, bei angekoppelter Ballenpresse automatisch die Kombinationsbetrieb-Einstellung einzustellen und bei fehlender Ballenpresse automatisch die Einzelbetrieb-Einstellung einzustellen. Das heißt die Einstellung der Bremskraft wird automatisch durch das Ankoppeln oder Abkoppeln der Ballenpresse ausgelöst. Insbesondere kann die Einstellung der Bremskraft in Abhängigkeit von einer Belastung der hinteren Ankopplungsvorrichtung erfolgen. Beispielsweise kann ein Kraftsensor an der hinteren Ankopplungsvorrichtung angeordnet sein, der mit einer Steuereinheit verbunden ist, die ihrerseits dazu eingerichtet ist, die Bremskraft in Abhängigkeit von den Messwerten des Kraftsensors vorzunehmen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht eines erfindungsgemäßen Schwaders;
- Fig. 2: eine Seitenansicht des Schwaders aus Fig. 1;
- Fig. 3: eine Schnittdarstellung entsprechend der Linie III-III in Fig.2; sowie
- Fig. 4: eine Draufsicht eines Gespanns mit einem Schlepper, dem Schwader aus Fig.1 sowie einer Ballenpresse.

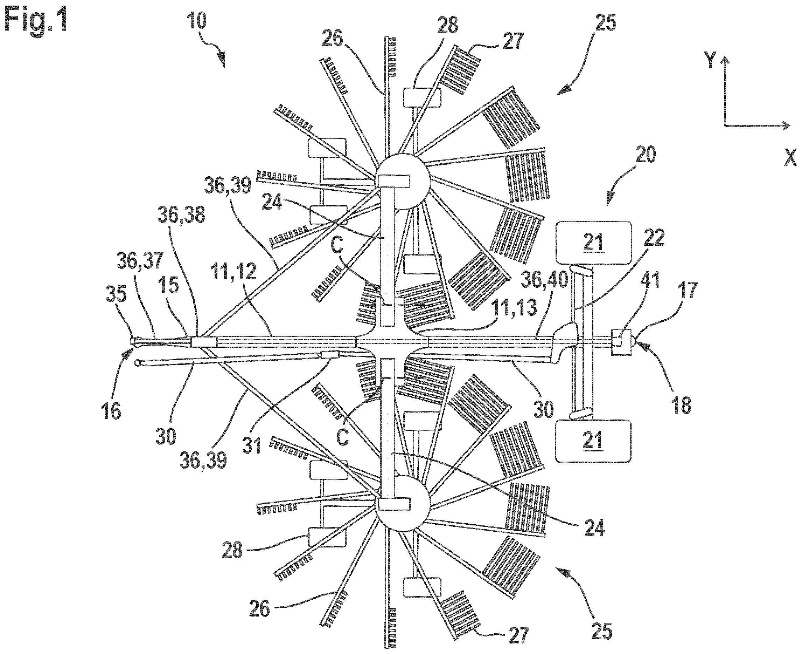

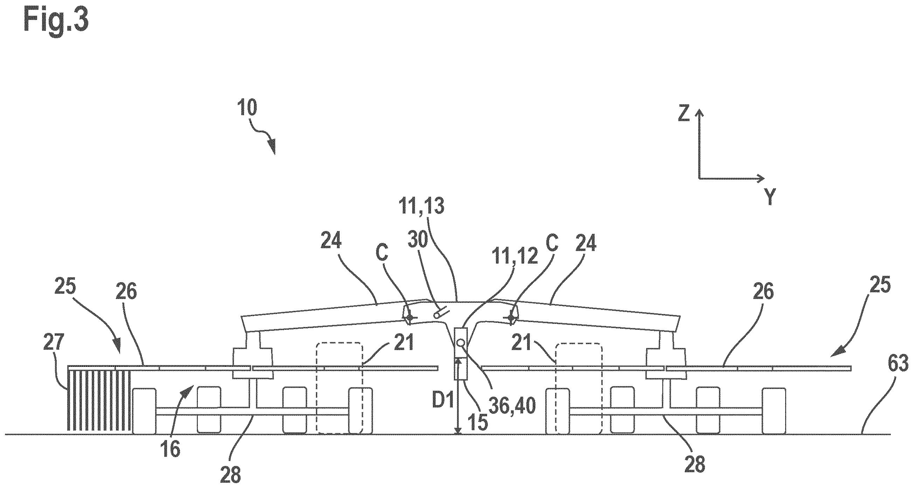

Fig. 1 bis 3 zeigen einen erfindungsgemäßen Schwader 10, genauer gesagt einen Kreiselschwader. Hier und in den folgenden Figuren sind jeweils eine Längsachse X, eine Querachse Y sowie eine Hochachse Z des Schwaders 10 eingezeichnet. Der Schwader 10 weist einen Rahmen 11 auf, der über ein Fahrwerk 20 gegenüber einem Boden 63 abgestützt ist. Der Rahmen 11 ist zum größten Teil durch einen Längsabschnitt 12 gebildet, der in Form eines Rohrs mit rechteckigem Querschnitt parallel zur Längsachse X verläuft. In einem bezüglich der Längsachse X ungefähr mittigen Bereich des Längsabschnitts 12 weist der Rahmen 11 einen Ausleger-Anbindungsabschnitt 13 auf, der bezüglich der Hochachse Z gegenüber dem Längsabschnitt 11 aufragt. Mit dem Ausleger-Anbindungsabschnitt 13 sind zwei Auslegerarme 24 verbunden, von denen jeder um eine Ausleger-Schwenkachse C schwenkbar ist. Hierdurch ist es möglich, den jeweiligen Auslegerarm 24 zusammen mit einem daran angeordneten Rechkreisel 25 aus der in den Figuren dargestellten Bearbeitungsposition in eine Transportposition zu schwenken, welche für einen Straßentransport vorgesehen ist. Der jeweilige Rechkreisel 25 bildet ein Bearbeitungsorgan des Schwaders 10, mit welchem Erntegut erfasst und in einem Ablagebereich 64 abgelegt werden kann. Jeder der Rechkreisel 25 weist eine Mehrzahl von Zinkenarmen 26 auf, an denen wiederum Zinken 27 befestigt sind. Im Zuge der angetriebenen Drehung des Rechkreisels 25 wird die Einstellung der Zinken 27 kurvenbahngesteuert verändert, was im Stand der Technik bekannt ist und hier nicht weiter erläutert wird. Jeder Rechkreisel 25 ist in der Bearbeitungsposition durch ein Hilfsfahrwerk 28 am Boden 63 abgestützt.

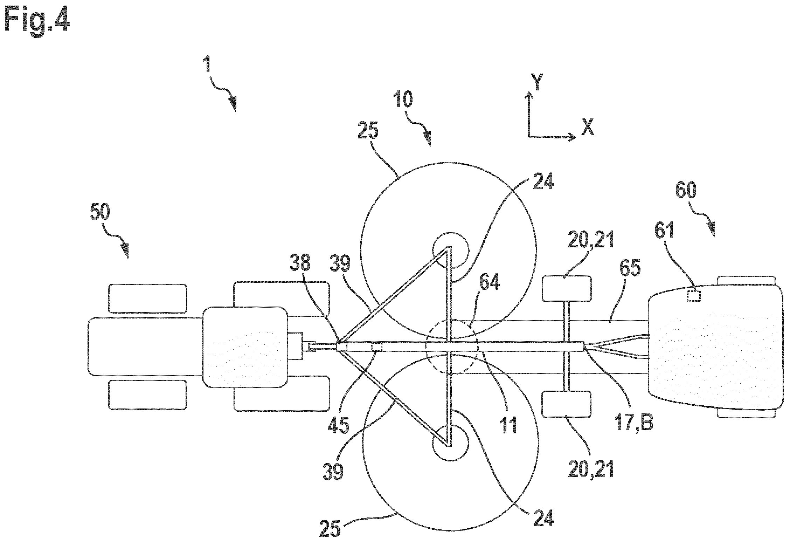

Vorderseitig ist am Rahmen 11 eine vordere Kopplungsvorrichtung 15 befestigt, die ein Kupplungsmaul 16 aufweist. Das Kupplungsmaul 16 definiert einen vorderen Ankopplungspunkt A und kann mit einer nicht dargestellten Kugelkopfkupplung eines Schleppers 50 zusammenwirken, so dass der Schwader 10 vom Schlepper 50 gezogen werden kann, was in Fig. 4 dargestellt ist. Des Weiteren ist hinterseitig am Rahmen 11 eine hintere Kopplungsvorrichtung 17 angeordnet, die eine Kugelkopfkupplung 18 aufweist. Sie definiert einen hinteren Ankopplungspunkt B und kann mit einem ebenfalls nicht dargestellten Kupplungsmaul einer Ballenpresse 60 zusammenwirken, wodurch die Ballenpresse 60 an den Schwader 10 angehängt werden kann, was ebenfalls in Fig. 4 dargestellt ist. Auf diese Weise können der Schlepper 50, der Schwader 10 und die Ballenpresse 60 ein Gespann 1 bilden. Während des Betriebs des Gespanns 1 erfassen die Rechkreisel 25 am Boden liegendes Erntegut und legen dieses im Ablagebereich 64 ab (s. Fig. 4). Durch die Vorwärtsbewegung des Schwaders 10 entsteht so ein Schwad 65, der wiederum von der Ballenpresse 60 aufgenommen und zu Erntegutballen verpresst wird.

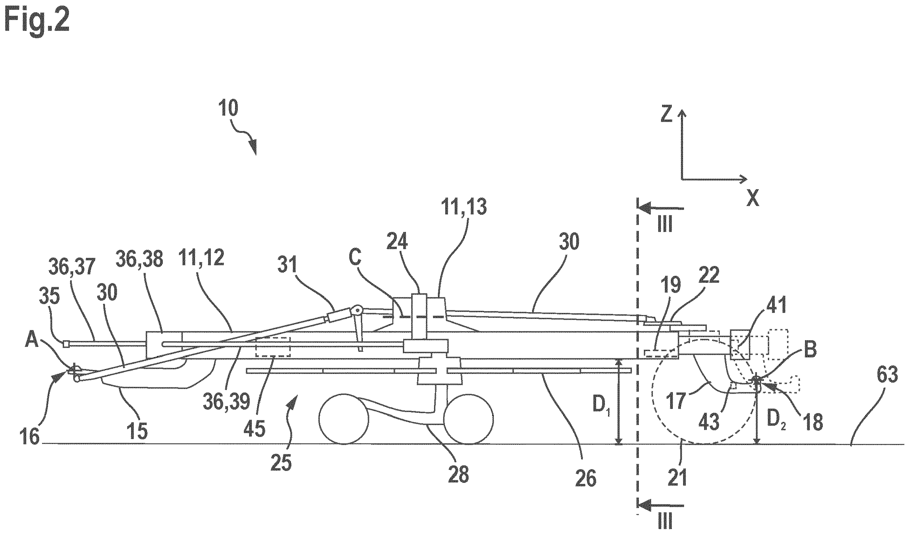

Der Schwader 10 weist zwei Lenkstangen 30 auf, von denen eine in angekoppeltem Zustand gelenkig mit dem Schlepper 50 verbunden ist. Hierdurch wird bei einer Kurvenfahrt des Schleppers 50 über die Lenkstangen 30 entweder eine Zug- oder eine Schubkraft auf Spurstangen 27 des Fahrwerks 20 übertragen und eine gleichgerichtete Lenkbewegung der Räder 21 des Fahrwerks 20 erzeugt. Wie insbesondere in Fig. 2 erkennbar ist, ist zwischen den Lenkstangen 30 ein Lenkaktor 31 zwischengeordnet. Durch diesen kann unabhängig von den Bewegungen des Schleppers 50 der Lenkwinkel der Räder 21 verändert werden.

Neben dem Vorhandensein der hinteren Kopplungsvorrichtung 17 weist der Schwader 10 verschiedene Anpassungen an das Ziehen der Ballenpresse 60 auf. Um auf den Rahmen 11 wirkende Biegemomente, die aus der Zugkraftübertragung resultieren, zu minimieren, verläuft der Längsabschnitt 12, durch den die beiden Kopplungsvorrichtungen 15, 17 verbunden sind, parallel zur Längsachse X. Außerdem ist er niedrig angeordnet und somit nahezu auf Höhe der Ankopplungspunkte A, B. Genauer gesagt beträgt ein Bodenabstand D₁ des Längsabschnitts 12 im gezeigten Beispiel nur etwa 30% mehr als ein minimaler Bodenabstand D₂ der Ankopplungspunkte A, B, welches in diesem Fall der Bodenabstand des hinteren Ankopplungspunkt B ist. Aufgrund der niedrigen Anordnung des Längsabschnitts 12 müssen die Auslegerarme 24 über den sich aufwärts erstreckenden Ausleger-Anbindungsabschnitt 13 mit dem Rahmen 11 verbunden werden. Sie sind bezüglich der Hochachse Z überwiegend höher angeordnet als der Längsabschnitt 12. Insbesondere sind die Ausleger-Schwenkachsen C höher angeordnet als der Längsabschnitt 12.

Der Schwader 10 weist eine Eingangskupplung 35 auf, die zum Zusammenwirken mit einer Zapfwelle des Schleppers 50 dient. An die Eingangskupplung 35 schließt sich eine Gelenkwelle 37 einer Getriebeanordnung 36 an. Die Gelenkwelle 37 mündet in einem Verteilergetriebe 38, von welchem einerseits zwei Auslegerwellen 39 ausgehen, die zum Antrieb der Rechkreisel 25 dienen, sowie zum anderen eine Längswelle 40. Die Längswelle 40 ist innerhalb des Längsabschnitts 12 geführt bis zu einer Ausgangskupplung 41, die an der hinteren Kopplungsvorrichtung 17 angeordnet ist. Die Ausgangskupplung 41 kann wiederum mit einer nicht dargestellten Gelenkwelle der Ballenpresse 60 verbunden werden, wodurch eine Antriebskraft des Schleppers 50 über den Schwader 10 an die Ballenpresse 60 weitergeleitet wird.

Während die vordere Kopplungsvorrichtung 15 starr mit dem Rahmen 11 verbunden ist, kann die hintere Kopplungsvorrichtung 17 mittels eines Stellaktors 19 entlang der Längsachse X verstellt werden. Dies ist schematisch in Fig. 2 angedeutet, in welcher eine weiter nach hinten ausgefahrenen Position in kurz gestrichelten Linien dargestellt ist. Durch diesen Verstellvorgang kann der Schwader 10 an unterschiedliche Ballenpressen 60 angepasst werden. Bei einer Ballenpresse 60 mit einer längeren Deichsel kann die hintere Kopplungsvorrichtung 17 weiter nach vorne verstellt werden, während sie bei einer Ballenpresse 60 mit einer kürzeren Deichsel weiter nach hinten verstellt werden kann, so dass der eigentliche Fahrzeugkörper der Ballenpresse 60 einen ausreichenden Abstand vom Schwader 10 und insbesondere vom Fahrwerk 20 einhalten kann. So können insbesondere bei Kurvenfahrten Kollisionen vermieden werden. Außerdem kann bei Kurvenfahrten verhindert werden, dass die angehängte Ballenpresse 60 gewissermaßen aus der Spur läuft und somit Teile des Schwads 64 nicht aufgenommen werden.

Die Ausgangskupplung 41 ist mit der hinteren Kopplungsvorrichtung 17 verbunden, so dass ihre Relativposition gegenüber dem hinteren Ankopplungspunkt B bezüglich der Längsachse X von der Einstellung der hinteren Kopplungsvorrichtung unabhängig ist. Hierdurch bleibt ein Gelenk einer Gelenkwelle, durch welche die Ballenpresse 60 mit der Ausgangskupplung 41 verbunden wird, stets in der gleichen Position bezüglich des hinteren Ankopplungspunkt B. Die Ausgangskupplung 41 kann gegenüber dem hinteren Ankopplungspunkt B bezüglich der Längsachse X zwischen 10 cm und 20 cm nach vorne versetzt sein. Hierdurch ist bei einer typischen Gelenkwelle einer Ballenpresse 60 gewährleistet, dass das Gelenk wenigstens annähernd vertikal über dem hinteren Ankopplungspunkt B angeordnet ist. Somit entstehen bei einer Kurvenfahrt allenfalls geringfügige Schubkräfte innerhalb der Gelenkwelle.

Der Schwader 10 weist eine Schwader-Steuereinheit 45 auf, die beispielsweise auch den Stellaktor 19 ansteuern kann. Die Schwader-Steuereinheit 45 ist auch mit einem Kraftsensor 43 verbunden, welcher in Fig. 2 schematisch innerhalb der hinteren Kopplungsvorrichtung 17 dargestellt ist. Über den Kraftsensor 43 kann die Schwader-Steuereinheit 45 erkennen, ob aktuell eine Ballenpresse 60 angehängt ist oder nicht. Bei fehlender Ballenpresse 60 stellt die Schwader-Steuereinheit 45 eine mögliche Bremskraft des Fahrwerks 20 auf eine schwächere Einzelbetrieb-Einstellung ein. Ist eine Ballenpresse 60 angehängt, stellt die Schwader-Steuereinheit 45 die Bremskraft auf eine stärkere Kombinationsbetrieb-Einstellung ein. Auf diese Weise wird einerseits verhindert, dass die Räder 21 bei fehlender Ballenpresse 60 blockieren, andererseits ist bei angehängter Ballenpresse 60 eine ausreichende Bremskraft vorhanden, die an die höhere Achslast des Fahrwerks 20 angepasst ist.

Die Schwader-Steuereinheit 45 kann des Weiteren den Lenkaktor 31 ansteuern, wodurch ein Lenkwinkel des Fahrwerks 20 unabhängig vom Schlepper 50 beeinflusst werden kann. Hierdurch kann beispielsweise Einfluss auf die Fahrlinie und/oder Ausrichtung des Schwaders 10 gegenüber dem Schlepper 50 genommen werden. Hierzu kann die Schwader-Steuereinheit 45 wiederum externe Steuersignale empfangen. Die Steuersignale könnten einerseits vom Schlepper 50 übertragen werden. Andererseits wäre es allerdings auch möglich, dass eine Pressen-Steuereinheit 61 der Ballenpresse 60 die Steuersignale übermittelt. Um eine entsprechende Datenübertragung zu ermöglichen, kann der Schwader 10 im hinteren Bereich des Rahmens 11 eine drahtgebundene Schnittstelle aufweisen, die mit einer entsprechenden Schnittstelle der Ballenpresse 60 verbunden wird, beispielsweise gemäß dem ISOBUS-Standard.

## Patentansprüche

1. Schwader (10) mit einem Rahmen (11), einem Fahrwerk (20) zur Abstützung des Rahmens (11), wenigstens einem wenigstens indirekt mit dem Rahmen (11) verbundenen Bearbeitungsorgan (25) zum Erfassen von Erntegut, sowie einer bezüglich einer Längsachse (X) des Schwaders (10) vorderseitig am Rahmen (11) angeordneten vorderen Kopplungsvorrichtung (15), die einen vorderen Ankopplungspunkt (A) zum Anhängen des Schwaders (10) an einem Schlepper (50) definiert,
**dadurch gekennzeichnet, dass**
bezüglich der Längsachse (X) hinterseitig am Rahmen (11) eine hintere Kopplungsvorrichtung (17) angeordnet ist, die einen hinteren Ankopplungspunkt (B) zum Anhängen einer Ballenpresse (60) an den Schwader (10) definiert.

2. Schwader nach Anspruch 1, **dadurch gekennzeichnet, dass** der Schwader (10) als Kreiselschwader ausgebildet ist und als Bearbeitungsorgan (25) wenigstens einen Rechkreisel aufweist.

3. Schwader nach einem der vorangehenden Ansprüche, **dadurch gekennzeichnet, dass** wenigstens ein Bearbeitungsorgan (25) an einem mit dem Rahmen (11) verbundenen Auslegerarm (24) angeordnet ist.

4. Schwader nach einem der vorangehenden Ansprüche, **dadurch gekennzeichnet, dass** der Rahmen (11) einen Längsabschnitt (12) aufweist, welcher sich entlang der Längsachse (X) erstreckt und die vordere Kopplungsvorrichtung (15) mit der hinteren Kopplungsvorrichtung (17) verbindet.

5. Schwader nach einem der vorangehenden Ansprüche, **dadurch gekennzeichnet, dass** der Längsabschnitt (12) einen Bodenabstand (D₁) aufweist, der höchstens 50%, bevorzugt höchstens 30% größer ist als ein minimaler Bodenabstand (D₂) der Ankopplungspunkte (A, B).

6. Schwader nach einem der vorangehenden Ansprüche, **dadurch gekennzeichnet, dass** der Längsabschnitt (12) auf wenigstens 80% seiner Länge in einem Winkel von höchstens 10°, bevorzugt höchstens 5°, zur Längsachse (X) verläuft.

7. Schwader nach einem der vorangehenden Ansprüche, **dadurch gekennzeichnet, dass** wenigstens ein Auslegerarm (24) mit einem Ausleger-Anbindungsabschnitt (13) des Rahmens (11) verbunden ist, der bezüglich einer Hochachse (Z) aufwärts vom Längsabschnitt (12) abragt, so dass der wenigstens eine Auslegerarm (24) wenigstens im Bereich des Ausleger-Anbindungsabschnitts (13) wenigstens überwiegend höher angeordnet ist als der Längsabschnitt (12).

8. Schwader nach einem der vorangehenden Ansprüche, **dadurch gekennzeichnet, dass** die hintere Kopplungsvorrichtung (17) verstellbar ist, wodurch der hintere Ankopplungspunkt (B) relativ zum Rahmen (11) bezüglich der Längsachse (X) verlagerbar ist und bevorzugt relativ zum Fahrwerk (20) bezüglich der Längsachse (X) verlagerbar ist.

9. Schwader nach einem der vorangehenden Ansprüche, **dadurch gekennzeichnet, dass** dieser eine Eingangskupplung (35) zur Antriebsverbindung mit einer Zapfwelle des Schleppers (50) aufweist sowie eine Ausgangskupplung (41), die wenigstens kraftübertragend an die Eingangskupplung (35) koppelbar ist und die zur Antriebsverbindung mit der Ballenpresse (60) ausgebildet ist.

10. Schwader nach einem der vorangehenden Ansprüche, **dadurch gekennzeichnet, dass** dieser eine Getriebeanordnung (36) aufweist, über die sowohl das wenigstens eine Bearbeitungsorgan (25) als auch die Ausgangskupplung (41) wenigstens kraftübertragend an die Eingangskupplung (35) koppelbar sind.

11. Schwader nach einem der vorangehenden Ansprüche, **dadurch gekennzeichnet, dass** eine Längswelle (40) zur Kraftübertragung von der Eingangskupplung (35) zur Ausgangskupplung (41) wenigstens überwiegend innerhalb des Rahmens (11), bevorzugt wenigstens überwiegend innerhalb des Längsabschnitts (12), angeordnet ist.

12. Schwader nach einem der vorangehenden Ansprüche, **dadurch gekennzeichnet, dass** die Ausgangskupplung (41) derart mit der hinteren Kopplungsvorrichtung (17) verbunden ist, dass ihre Relativposition gegenüber dem hinteren Ankopplungspunkt (B) bezüglich der Längsachse (X) von der Einstellung der hinteren Kopplungsvorrichtung (17) unabhängig ist.

13. Schwader nach einem der vorangehenden Ansprüche, **dadurch gekennzeichnet, dass** die Ausgangskupplung (41) gegenüber dem hinteren Ankopplungspunkt (B) bezüglich der Längsachse (X) zwischen 10 cm und 20 cm nach vorne versetzt angeordnet ist.

14. Schwader nach einem der vorangehenden Ansprüche, **dadurch gekennzeichnet, dass** eine auf das Fahrwerk (20) ausübbare Bremskraft verstellbar zwischen einer schwächeren Einzelbetrieb-Einstellung, die an einen Einsatz ohne Ballenpresse (60) angepasst ist, und einer stärkeren Kombinationsbetrieb-Einstellung, die an einen Einsatz mit angekoppelter Ballenpresse (60) angepasst ist.

15. Schwader nach einem der vorangehenden Ansprüche, **dadurch gekennzeichnet, dass** dieser dazu eingerichtet ist, bei angekoppelter Ballenpresse (60) automatisch die Kombinationsbetrieb-Einstellung einzustellen und bei fehlender Ballenpresse (60) automatisch die Einzelbetrieb-Einstellung einzustellen.
